Europäisches Patentamt

European Patent Office

Office européen des brevets

(11) Veröffentlichungsnummer : **0 073 900**
**B1**

(12) # EUROPÄISCHE PATENTSCHRIFT

(45) Veröffentlichungstag der Patentschrift :
28.05.86

(21) Anmeldenummer : **82106170.2**

(22) Anmeldetag : **09.07.82**

(51) Int. Cl.⁴ : **A 01 D 78/12**

(54) **Heuwerbungsmaschine.**

(30) Priorität : **27.08.81 DE 3133843**

(43) Veröffentlichungstag der Anmeldung :
**16.03.83 Patentblatt 83/11**

(45) Bekanntmachung des Hinweises auf die Patenterteilung : **28.05.86 Patentblatt 86/22**

(84) Benannte Vertragsstaaten :
**AT BE CH DE FR GB IT LI NL**

(56) Entgegenhaltungen :
**DE-A- 2 523 265**
**FR-A- 2 434 558**
**FR-A- 2 435 190**
**FR-A- 2 450 554**
**US-A- 4 144 699**

(73) Patentinhaber : **Klöckner-Humboldt-Deutz AG Zweigniederlassung Fahr**
**D-7702 Gottmadingen (DE)**

(72) Erfinder : **Scherer, Albrecht**
**Friedhofstrasse 17**
**D-7702 Gottmadingen (DE)**
Erfinder : **Wessel, Ulrich**
**Hilzingerstrasse 33**
**D-7702 Gottmadingen (DE)**

(74) Vertreter : **Berngruber, Otto, Dr. Dipl.-Chem. et al**
**Patentanwälte Haft, Berngruber,Czybulka**
**Hans-Sachs-Strasse 5**
**D-8000 München 5 (DE)**

## Beschreibung

Die Erfindung bezieht sich auf eine Heuwerbungsmaschine nach dem Oberbegriff des Anspruchs 1.

Solche, auch Universal-Heumaschinen genannte Maschinen sind für alle in der Heuwerbung vorkommenden Arbeitsgänge geeignet, d. h. sie können zum Zetten, Wenden und Schwadenziehen eingesetzt werden.

Für den Betriebsfall « Schwaden » wird die Maschine mit gesteuertem Zinken eingesetzt. Hierbei greifen am Ende der drehbar im Maschinenrahmen gelagerten Zinkentragarme an Kurbeln vorgesehene Steuerrollen in eine in bezug auf das Maschinengestell ortsfeste Kurvenbahn ein. Für den Betriebsfall « Zetten » ist eine Steuerung der Zinken nicht erforderlich. Hier laufen die Steuerrollen bei gleichbleibender Stellung der Zinken in einer zur Bodenoberfläche ebenen Kreisbahn um.

Eine Maschine nach dem Oberbegriff des Anspruchs 1 ist beispielsweise aus der US-A-4 144 699 bekannt. Dabei ist um die Rechraddrehachse herum eine Steuervorrichtung angeordnet. Der innen liegende Teil der Steuervorrichtung ist in Form einer räumlich verwundenen Kurvenbahn mit äquidistant zueinander liegenden Führungsbahnen ausgebildet, in die die Steuerrollen an den Kurbeln der Zinkentragarme in der Schwadstellung eingreifen. Der innen liegende Teil geht in einen außen liegenden Teil über, der eine in einer Ebene liegende koaxial zur Rechraddrehachse verlaufende Nut bildet, die ebenfalls zwei äquidistant zueinander liegende Führungsbahnen aufweist. In diese Nut greifen die Steuerrollen an den Kurbeln der Zinkentragarme in der Zettstellung ein. Die Zinkentragarme sind im Maschinengestell um eine quer zu ihrer Längsachse angeordnete Achse verschwenkbar gelagert, so daß die Steuerrollen von der innen liegenden, für das Schwaden bestimmten, räumlich verwundenen Kurvenbahn in die außen liegende, für das Zetten bestimmte, in einer Ebene liegenden Nut gebracht werden können und umgekehrt. Eine weitere Heuwerbungsmaschine der im Oberbegriff des Anspruchs 1 angegebenen Gattung ist in der EP-A-67 282 beschrieben. Diese Heuwerbungsmaschine unterscheidet sich von derjenigen nach der US-A-4 144 699 im wesentlichen dadurch, daß an den Kurbeln neben den ersten, in bezug auf die Rechraddrehachse nach hinten gerichteten Steuerrollen zusätzliche zweite, in bezug auf die Rechraddrehachse nach außen gerichtete Steuerrollen angeordnet sind, und daß die gegenüber der Kurvenbahn außen liegende ebene Führungsbahn in bezug auf die Rechraddrehachse nach innen geöffnet ist und insgesamt unter- oder oberhalb der Ebene der Zinkentragarme derart liegend angeordnet ist, daß die zweiten Steuerrollen zum Umstellen der Zinkentragarme in ihre ungesteuerte Lage zum Zetten in die Führungsbahn eintauchen.

Um das Erfassen des auf dem Boden liegenden Ernteguts zu verbessern, sind die Zinken an den Zinkentragarmen in Drehrichtung der Rechräder im allgemeinen etwas angestellt und/oder an ihren freien Enden in Drehrichtung der Rechräder abgebogen. Weiterhin sind die Zinken über Torsionsfedern an den Zinkentragarmen befestigt, beispielsweise gehen sie an dem dem Zinkentragarm zugewandten Ende in Federwindungen über, deren Federkraft beim Schwadenziehen und Zetten dann optimal zum Tragen kommt, wenn sie von dem Erntegut in einer Richtung belastet werden, die dem Drehsinn der Federwindungen beim Aufwinden entspricht.

Demgegenüber erfolgt bei der Maschine nach der US-A-4 144 699 wie bei der Maschine nach der erwähnten EP-A-67 282 die Belastung der Zinken lediglich in einer Drehrichtung des Rechrades in der geschilderten optimalen Funktionsweise, desgleichen sind die Zinken nur in einer Drehrichtung nach vorne etwas angestellt bzw. ihre freien Enden nach vorne abgebogen, während in der umgekehrten Drehrichtung der Rechräder die Zinken nach hinten angestellt sind bzw. ihre freien Enden nach hinten abgebogen sind und ihre Federwindungen in einer ungünstigen Richtung belastet werden.

Dadurch wird beim Zetten das Erntegut von dem betreffenden Rechrad nur noch ungenügend erfaßt, d. h. es kommt zu einer Herabsetzung der Arbeitsleistung der Maschine und zu einem einseitigen Verziehen des Streubildes. Im umgekehrten Fall, also wenn zwar beim Zetten die richtige Anordnung und optimale Belastung der Zinken vorliegt, nicht jedoch beim Schwadenziehen, tritt ebenfalls eine Verminderung der Arbeitsleistung auf, und zwar dadurch, daß, wie beim Zetten, die Zinken das Erntegut nicht mehr ordnungsgemäß erfassen, und darüber hinaus die optimale Steuerung der Zinken durch die räumlich gewundene Kurvenbahn verloren geht.

Aus der DE-A-2 523 265 ist eine Heuwerbungsmaschine bekannt, bei der diese vorstehend im Zusammenhang mit der US-A-4 144 699 sowie der deutschen Anmeldung EP-A-67 282 geschilderten Nachteile vermieden sind. Dazu weist die Heuwerbungsmaschine nach der DE-A-2 523 265 zum Schwadenziehen wiederum die übliche räumlich verwundene Kurvenbahn auf, mit der Steuerrollen in Eingriff stehen, die an an den Zinkentragarmen angeordneten Kurbeln vorgesehen sind. Zum Umkehr der Drehrichtung der Rechräder werden durch Aufwärtsschwenken der Zinkentragarme um eine quer zu ihrer Längsachse verlaufende Achse die Zinkentragarme und die Kurvenbahn außer Eingriff gebracht, worauf die Zinkentragarme um ihre Längsachse dann so gedreht werden, daß die Steuerrollen an den Kurbeln der Zinkentragarme nach Umkehr der Drehrichtung des betreffenden Rechrades wieder eine nachlaufende Stellung einnehmen. Damit die Zinken nach Umkehr der Drehrichtung bezüglich ihrer Federwindungen in der richtigen Richtung belastet und ihre freien Enden in Drehrichtung stets leicht angestellt sind, sind sie an einem Zinkenträgerteil befestigt, wobei jedes Zinkenträgerteil um eine Achse verschwenkbar ist, die parallel zur Achse des Kurbelhebels verläuft, an dem die Steuerrolle angeordnet ist. Falls die Maschine als Zetter eingesetzt wird, werden die Zinkentragarme von der Kurvenbahn entkoppelt und im Drehgestell gegen Verdrehen gesichert. Die letzte Maßnahme bedingt jedoch eine sehr stabile Ausführung des Drehgestells, was zu einer nicht unerheblichen Gewichtserhöhung der Maschine führt. Außerdem sind zum Einleiten der in der Zettstellung auftretenden Kräfte in das Maschinengestell bzw. für die Verriegelung jedes der Zinkentragarme an dem Maschinengestell besondere Maßnahmen vorgesehen, nämlich eine an jedem der Zinkentragarme vorgesehene Arretierlasche, die mit einer zugehörigen am Drehgestell angeordneten Lasche in Eingriff gebracht wird.

Aus der FR-A-2 435 190 ist eine Heuwerbungsmaschine mit wenigstens einem in beiden Drehrichtungen antreibbaren Rechrad bekannt, wobei die Rechzinken an einem Zinkenträgerteil befestigt sind, das mittels eines gabelförmig ausgebildeten Hebelarms mit vertikaler Schwenkachse am äußeren Ende des zugehörigen Zinkentragarms angelenkt und arretierbar ist.

Die Erfindung, wie sie in den Ansprüchen gekennzeichnet ist, liegt die Aufgabe zugrunde, eine Heuwerbungsmaschine anzugeben, die bei einfachem konstruktiven Aufbau und ohne merkliche Gewichtserhöhung eine optimale Arbeitsleistung sowohl im Betriebsfall « Schwaden » wie im Betriebsfall « Zetten » gewährleistet.

Die erfindungsgemäße Heuwerbungsmaschine überrascht durch ihren einfachen Aufbau. Auf besonders stabile, schwergewichtige Teile kann dabei ebenso verzichtet werden, wie auf schwer herzustellende Bauteile. Eine optimale Arbeitsleistung beim Schwadenziehen wird insbesondere dann erreicht, wenn die Maßnahmen der Ansprüche 5 und 6 verwirklicht werden.

Weitere für die Erfindung wesentliche Merkmale sowie durch sie erreichte Vorteile sind in der nachstehenden Beschreibung eines Ausführungsbeispieles der erfindungsgemäßen Heuwerbungsmaschine angegeben, die anhand der beigefügten Zeichnung erfolgt. In der Zeichnung zeigen :

Figur 1 eine Heuwerbungsmaschine in der Draufsicht beim Betriebsfall « Schwaden » ;

Figur 2 eine Draufsicht auf die Heuwerbungsmaschine nach Figur 1, jedoch beim Betriebsfall « Zetten » ;

Figuren 3 und 4 jeweils eine Seitenansicht des in Figur 1 bzw. 2 linken Rechrades der Heuwerbungsmaschine, wobei von mehreren Zinkentragarmen in Figur 3 lediglich ein Zinkentragarm vollständig und in Figur 4 lediglich zwei Zinkentragarme dargestellt sind ; und

Figuren 5 und 6 jeweils in der Draufsicht einen mit einer Arretiervorrichtung arretierten Zinkentragarm im Betriebsfall « Schwaden » bzw. « Zetten ».

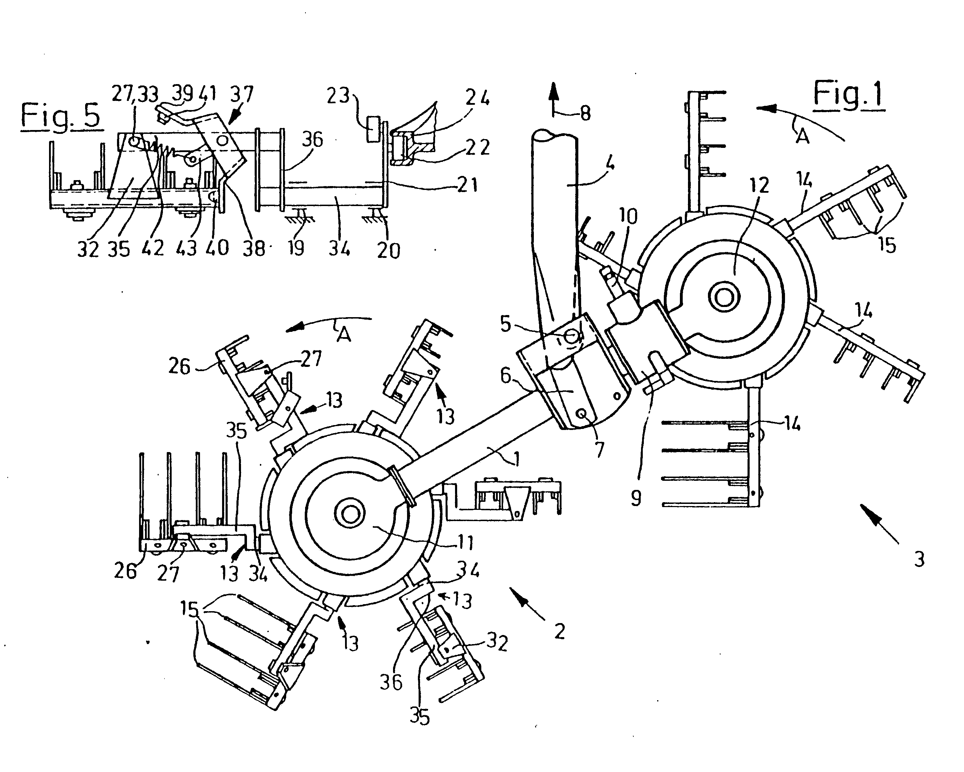

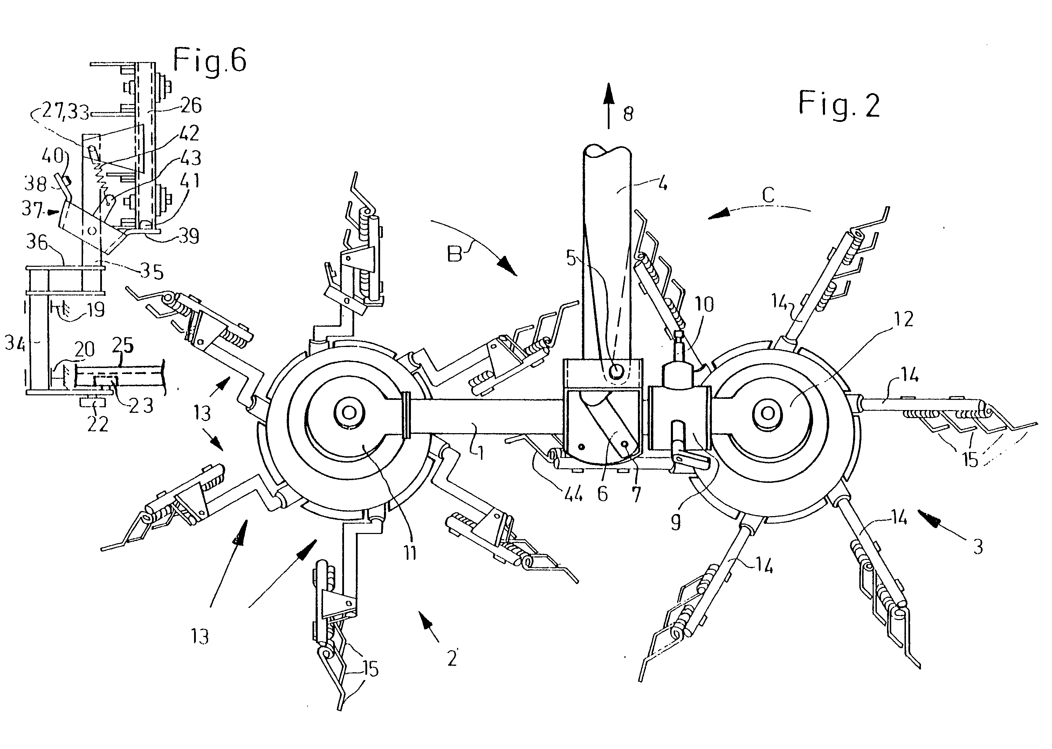

Die in Figur 1 und 2 dargestellte Heuwerbungsmaschine weist an den äußeren Enden eines Rahmenträgers 1 zwei Rechräder 2 und 3 auf. Die Maschine ist mittels einer Zugdeichsel 4 in üblicher Weise an einem nicht dargestellten Schlepper anhängbar.

Die Zugdeichsel 4 ist gegenüber dem Rahmenträger 1 um eine etwa senkrechte Achse 5 verschwenkbar und mittels einer eine Verlängerung der Zugdeichsel 4 bildenden Lasche 6 mittels zweier Bohrungen durch einen Riegelbolzen 7 gegenüber dem Rahmenträger 1 feststellbar, um die Maschine jeweils in der für die Schwadstellung gemäß Figur 1 bzw. für die Zettstellung gemäß Figur 2 erforderlichen Winkellage, bezogen auf die Zugdeichsel 4 bzw. die durch den Pfeil 8 wiedergegebene Fahrtrichtung, einstellen zu können.

Am Rahmenträger 1 ist ein kombiniertes Untersetzungs- und Wendegetriebe 9 angeordnet, das einen Anschlußzapfen 10 für die nicht dargestellte Schlepperzapfwelle aufweist und von dem aus der in der Zeichnung nicht näher dargestellte Antrieb der Rechräder 2 und 3 erfolgt, z. B. über je eine Welle und ein Winkelgetriebe, das unter der Haube 11 bzw. 12 der Rechräder 2 und 3 angeordnet ist.

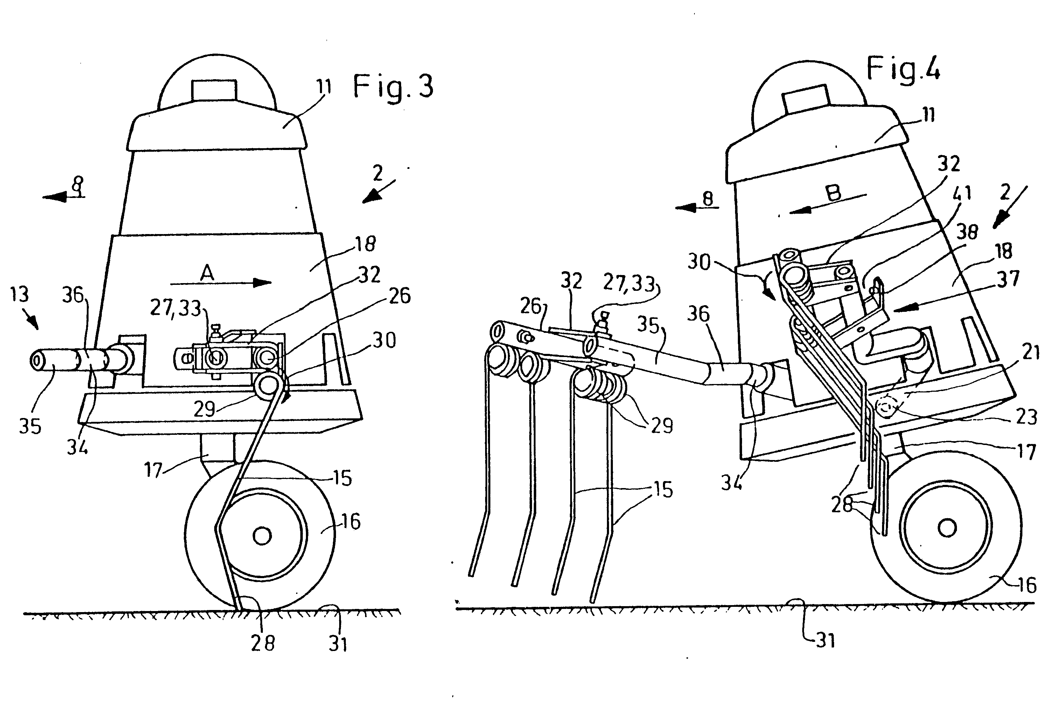

Jedes der beiden Rechräder 2 und 3 weist mehrere Zinkentragarme 13 bzw. 14 auf, an deren freien Enden Zinken 15 angeordnet sind. Wie in Figur 3 und 4 dargestellt, wird das Rechrad 2 mit Hilfe eines höhenverstellbaren Laufrades 16 über dem Boden geführt. Das Laufrad 16 ist schwenkbeweglich auf einer konzentrisch zum Rechrad 2 liegenden Achse 17 an dessen unterem Ende angeordnet. In gleicher Weise ist das andere Rechrad 3 mit einem Laufrad versehen.

Obgleich in der Zeichnung nicht näher dargestellt, ist auf der Achse 17 jedes der beiden Rechräder 2 und 3 eine Hohlwelle drehbar gelagert, die an ihrem oberen Ende unter der Haube 11 bzw. 12 ein Tellerrad für das Winkelgetriebe zum Antrieb des Rechrades 2 bzw. 3 aufweist. Jede Hohlwelle ist Bestandteil des Drehgestells 18 des betreffenden Rechrades 2 bzw. 3, an dem dessen rotierende Bauteile befestigt sind.

Wie insbesondere aus Figur 5 und 6 ersichtlich, ist jeder der Zinkentragarme 13 des Rechrades 2 in zwei im Abstand voneinander angeordneten Lagern 19 und 20 drehbar gelagert. Die Lager 19 und 20 sind mit dem Drehgestell 18 des Rechrades 2 fest verbunden.

Das der Drehachse 17 des Rechrades 2 zugekehrte innere Ende jedes der Zinkentragarme 13 ist mit einer Kurbel 21 drehfest verbunden. Die Kurbel 21 trägt eine erste Steuerrolle 22 und eine zweite Steuerrolle 23. Die Steuerrolle 22 greift in eine um die Drehradachse 17 herum angeordnete und mit derselben fest verbundene räumlich verwundene Kurvenbahn 24 ein, und die Steuerrolle 23 in eine Ebene, zur Achse 17 koaxiale, d. h. im wesentlichen horizontale Führungsbahn 25, die gleichfalls fest mit der Rechraddrehachse 17 verbunden und gegenüber der räumlich verwundenen Kurvenbahn 24 radial weiter außen angeordnet ist.

In gleicher Weise ist jeder der Zinkentragarme 14 des zweiten Rechrades 3 mit einer Kurbel versehen, an dem eine erste und eine zweite Steuerrolle angeordnet ist, die in eine innen liegende räumlich verwundene Kurvenbahn bzw. in eine radial weiter außen liegende ebene Führungsbahn eingreifen.

Beim Eingriff der Steuerrollen 22 der Zinkentragarme 13 in die innen liegende, räumlich verwundene Kurvenbahn 24 liegt die Schwadstellung der Heuwerbungsmaschine vor, während bei Eingriff der Steuerrollen 23 der Zinkentragarme 13 in die ebene, zur Achse 17 koaxiale Führungsbahn 25 die Zettstellung vorliegt, bei der eine Steuerung der Zinken 15 nicht erforderlich ist.

Um die Maschine von der einen auf die andere Betriebsstellung umstellen zu können, ist für jeden der Zinkentragarme 13 und 14 der Rechräder 2 und 3 eine axiale Verstellmöglichkeit vorgesehen.

In Figur 1 und 3 ist die Drehrichtung des Maschinengestells 18 des Rechrades 2 in der Schwadstellung durch den Pfeil A und in Figur 2 und 4 in der Zettstellung durch den Pfeil B wiedergegeben. Wie in Figur 4 angedeutet, läuft dann die Steuerrolle 23 an der Kurbel 21 jedes der Zinkentragarme 13 in der Zettstellung in der ebenen Führungsbahn 25 mit Vorlauf. Demgegenüber laufen die Steuerrollen 22 in der Schwadstellung, wie üblich, in der räumlich verwundenen Kurvenbahn 25 nach.

Für den Aufbau und die Funktion der beschriebenen Heuwerbungsmaschine ist wesentlich, daß die Zinken 15 des einen Rechrades 2 an Zinkenträgern 26 befestigt sind, die jeweils an den Zinkentragarmen 13 um eine Achse 27 verschwenkbar angelenkt sind. Die Achse 27 verläuft in der Zettstellung gemäß Figur 2, 4 und 6, d. h. bei Eingriff der Steuerrollen 23 in die ebene Führungsbahn 25, senkrecht zur Führungsbahn 25, also in der gleichen Vertikalebene wie die Rechraddrehachse 17. Diesen Verlauf in der gleichen Vertikalebene wie die Rechraddrehachse 17 zeigt die Schwenkachse 27 beim Betriebsfall « Schwaden » gemäß Figur 1, 3 und 5 nur vorübergehend, z. B. dann, wenn die Steuerrollen 22 den tiefsten Punkt der räumlich verwundenen Kurvenbahn 24 durchlaufen.

Wie besonders deutlich aus Figur 3 und 4 hervorgeht, sind die Zinken 15 an ihren unteren, freien Enden 28 sowohl in der Schwadstellung wie in der Zettstellung nach vorne gerichtet. Weiterhin gehen die Zinken 15 an ihrem oberen, an den Zinkenträgerteilen 26 des Rechrades 2 bzw. an den Zinkentragarmen 14 des Rechrades 3 befestigten Ende in Federwindungen 29 über, die in Richtung des Pfeiles 30 gewunden sind.

Durch das Verschwenken jedes der Zinkenträgerteile 26 um den zugehörigen Zinkentragarm 13 des Rechrades 2 um die Schwenkachse 27 von der in Figur 1, 3 und 5 gezeigten Schwadstellung um 180° in die in Figur 2, 4 und 6 gezeigte Zettstellung wird erreicht, daß die unteren, freien Enden 28 der Zinken 15 sowohl in der Schwadwie in der Zettstellung in die Drehrichtung A bzw. B des Rechrades 2 abgebogen sind und daß ihre Federwindungen 29 in beiden Betriebsstellungen in Richtung des Pfeiles 30 belastet werden.

In beiden Betriebsstellungen können also die Zinken 15 des einen in seiner Drehrichtung umkehrbaren Rechrades 2 hinsichtlich ihrer Anordnung, einschließlich ihrer Federkraft, in der gleichen optimalen Weise zum Einsatz kommen wie die Zinken 15 des anderen, lediglich in einer Drehrichtung umlaufenden Rechrades 3, bei dem die Zinken 15 nicht wie beim Rechrad 2 an Zinkenträgerteilen 26, sondern unmittelbar an den Zinkentragarmen 14 befestigt sind. Das heißt, die Anordnung der Zinken 15 des einen in seiner Drehrichtung umkehrbaren Rechrades 2 entspricht in der Schwadstellung der Anordnung der Zinken 15 des anderen lediglich in einer Drehrichtung umlaufenden Rechrades 3, während in der Zettstellung die Zinken 15 des einen in seiner Drehrichtung umkehrbaren Rechrades 2 spiegelbildlich zu den Zinken 15 des anderen lediglich in einer Drehrichtung umlaufenden Rechrades 3 angeorndet sind.

Die Verbindung jedes der Zinkenträgerteile 26 mit den Zinkentragarmen 13 des Rechrades 2 wird durch einen gabelförmigen Hebelarm 32 gebildet, der sich von dem Zinkenträgerteil 26 weg zu der Schwenkachse 27 erstreckt, wobei ein Lagerbolzen 33 die beiden Enden jedes der gabelförmigen Hebelarme 32 sowie den zugehörigen Zinkentragarm 13 durchsetzt.

Jeder der mit einem Zinkenträgerteil 26 versehenen Zinkentragarme 13 des Rechrades 2 besteht aus einem, bezogen auf die Rechraddrehachse 17, radial inneren Abschnitt 34 und einem radial äußeren Abschnitt 35, die parallel versetzt zueinander verlaufen und durch einen Arm 36 miteinander verbunden sind.

Jeder der Zinkentragarme 13 ist am inneren Abschnitt 34 mittels der Lager 19 und 20 gelagert, während am äußeren Abschnitt 35 die Schwenkachse 27 für das zugehörige Zinkenträgerteil 26 angeordnet ist.

Wie der in Figur 1, 3 und 5 dargestellten Schwadstellung zu entnehmen, ist der radial äußere Abschnitt 35 jedes der Zinkentragarme 13 gegenüber dem inneren Abschnitt 34 um einen solchen Abstand versetzt angeordnet, der dem Abstand des zugehörigen Zinkenträgerteils 26 von dessen Schwenkachse 27 am Zinkentragarm 13 entspricht. Auf diese Weise liegt die Längsachse jedes der Zinkenträgerteile 26 in der Schwadstellung in der durch die Lager 19 und 20 definierten Schwenkachse des Zinkentragarms 13. Auf diese Weise wird in der Schwadstellung die Bewegung der Zinken 15 an den Zinkenträgerteilen 26 der Zinkentragarme 13 des einen in seiner Drehrichtung umkehrbaren Rechrades 2 in der gleichen optimalen Weise gesteuert wie die Bewegung der Zinken 15 an den Zinkentragarmen 14 des anderen lediglich in einer Drehrichtung umlaufenden Rechrades 3.

In der Zettstellung erfolgt keine Verschwenkung der Zinkentragarme 13 und 14 der Rechräder 2 und 3, vielmehr bewegen sich dieselben mit ungesteuerten Zinken 15 in einer gegenüber der Horizontalen in Fahrtrichtung 8 nach hinten leicht ansteigenden Ebene, so daß das Verschwenken der Zinkenträgerteile 26 aus der in Figur 1, 3 und 5 gezeigten Schwadstellung in die in Figur 2, 4 und 6 gezeigten Zettstellung zwar zu der gewünschten spiegelbildlichen Anordnung der Zinken 15 des einen Rechrades 2 zu den Zinken 15 des anderen Rechrads 3 führt, der Zettvorgang jedoch ansonsten nicht beeinträchtigt wird.

Jedes der Zinkenträgerteile 26 an dem einen in seiner Drehrichtung umkehrbaren Rechrad 2 ist in seiner Schwad- und seiner Zettstellung mit einer Arretiervorrichtung feststellbar. Dazu ist an jedem der Zinkentragarme 13 ein um eine zur Schwenkachse 27 des Zinkenträgerteils 26 parallele Achse verschwenkbarer Winkelhebel 37 vorgesehen, der in der Schwadstellung mit seinem einen Arm 38 und in der Zettstellung mit seinem anderen Arm 39 unter Formschluß an dem Zinkenträgerteil 26 angreift. Dieser Formschluß wird durch je einen Zapfen 40, 41 am einen bzw. anderen Arm 38 bzw. 39 des Winkelhebels 37 sowie durch je eine Eingriffsöffnung für den Zapfen 40 bzw. 41 an beiden Zinkenträgerteilen zustande gebracht. Der am Zinkenträgerteil 26 jeweils angreifende Winkelhebelarm 38 bzw. 39 ist auf das Zinkenträgerteil 26 in Eingriffsrichtung des Zapfens 40 bzw. 41 zu federbelastet. Dazu ist eine Zugfeder 42 vorgesehen, die mit ihrem einen Ende an einem zwischen den beiden Armen 38 und 39 des Winkelhebels 37 angeordneten Hebel 43 und mit ihrem anderen Ende an der Schwenkachse 27 am Zinkentragarm 13 befestigt ist.

Der Winkelhebel 37 kann leicht von Hand bedient werden. Auch ist der Schwerpunkt des Winkelhebels 37 so gewählt, daß bei einem eventuellen Bruch der Feder 42 der betreffende Zapfen 40 bzw. 41 des Arms 38 bzw. 39 des Winkelhebels 37 in Eingriffsstellung in der jeweiligen Eingriffsöffnung in dem Zinkenträgerteil 26 durch die Fliehkraft bei Umlauf des Rechrads 2 gehalten wird.

Die Arbeitsweise der Heuwerbungsmaschine ist wie folgt: In der Schwadstellung werden die Zinkenträgerteile 26 des Rechrades 2 in die in Figur 1, 3 und 5 gezeigte Stellung verschwenkt und mittels des Winkelhebels 37 arretiert. Weiterhin werden die Steuerrollen 22 an den Kurbeln 21 der Zinkentragarme 13 in Eingriff mit der räumlich verwundenen Kurvenbahn 24 gebracht. Die Drehachsen 17 der beiden Rechräder 2 und 3 verlaufen senkrecht. Auch die Steuerrollen der Zinkentragarme 14 des anderen Rechrades 3 werden mit der entsprechenden räumlich verwundenen Kurvenbahn in Eingriff gebracht.

Beide Rechräder 2 und 3 laufen in der gleichen Richtung A. Die Zinken 15 des vorne liegenden Rechrades 3 erfassen das am Boden 31 liegende Erntegut, führen es zur Maschinenmitte hin, wo es an die Zinken 15 des hinten liegenden Rechrades 2 übergeben wird, das das ingesamt zusammengeführte Erntegut zu einem in Figur 1 längs abgelegten Seitenschwad ablegt.

Um die Maschine in die Zettstellung überzuführen, werden beim Rechrad 2 und entsprechend beim Rechrad 3 die Steuerrollen 22 an den Kurbeln 21 der Zinkentragarme 13 durch Verschiebung der Zinkentragarme 13 in den Lagern 19 und 20 in axialer Richtung außer Eingriff mit der räumlich verwundenen Kurvenbahn 24 gebracht, und die Steuerrollen 23 in Eingriff mit der ebenen Führungsbahn 25. Durch Verschwenken jedes Winkelhebels 37 wird der Formschluß zwischen den Zapfen 40 und der zugehörigen Eingriffsöffnung in dem Zinkenträgerteil 26 gelöst und jeder der Zinkenträgerteile 26 wird um 180° um das äußere Ende des betreffenden Zinkentragarms 13 herum verschwenkt und dann durch Einrasten des Zapfens 41 am anderen Winkelhebelarm 39 in die zugehörige Eingriffsöffnung am Zinkenträgerteil 26 verriegelt. Mit einer Kurbel 44 (Figur 2) werden die Drehachsen 17 der beiden Rechräder 2 und 3 gegenüber der Zugdeichsel 4 so geneigt, daß die Zinkentragarme 13 und 14 beider Rechräder 2 und 3 in einer nach hinten leicht ansteigenden Ebene umlaufen. Der Rahmenträger 1 wird mittels der Lasche 6 und des Verriegelungsbolzens 7 in eine zur Zugdeichsel 4 senkrechte Stellung gebracht.

Die Drehrichtung der beiden Rechräder 2 und 3 ist entsprechend den Pfeilen B und C entgegengesetzt gerichtet, wobei sich ihre Arbeitskreise überschneiden. Das Erntegut wird von den Zinken 15 erfaßt, zur Mitte der Maschine zusammengeführt und breit nach hinten ausgestreut. Es kommt so ein zur Fahrtrichtung 8 völlig symmetrisches Streubild des Ernteguts zustande.

**Patentansprüche**

1. Heuwerbungsmaschine mit mindestens zwei mit Zinkentragarmen (13, 14) versehenen Rechrädern (2, 3), von denen wenigstens eines (2) in seiner Drehrichtung umkehrbar ist, wobei jedes Rechrad (2, 3) eine um seine Drehachse (17) angeordnete ortsfeste Kurvenbahn (24) aufweist, in die an Kurbeln (21) der Zinkentragarme (13, 14) angeordnet die Steuerrollen (22) eingreifen, wobei diese Lage der Schwadstellung entspricht, aus der die Zinkentragarme (13, 14) in eine weitere Lage überführbar sind, die dann der Zettstellung entspricht, in der die Steuerrollen (23) in einer zu Rechraddrehachse koaxialen ebenen ortsfesten Führungsbahn (25) umlaufen, und wobei die Steuerrollen (22, 23) eines (2) der Rechräder in der Zettstellung eine vorlaufende und in der Schwadstellung eine nachlaufende Stellung einnehmen oder umgekehrt, dadurch gekennzeichnet, daß die Zinken (15) eines jeden Zinkentragarms (13) des in seiner Drehrichtung umkehrbaren Rechrades (2) an einem Zinkenträgerteil (26) befestigt sind, das über eine vertikale Achse (27) mit dem Zinkentragarm (13) verbunden ist und zusammen mit den Zinken (15) um die vertikale Achse (27) um 180 Grad verschwenkbar und arretierbar ist, und die vertikale Achse (27) gegenüber der Schwenkachse (Lager 19, 20) des Zinkentragarms (13) derart versetzt angeordnet ist, daß die Längsachse des Zinkenträgerteils (26) in der Schwadstellung in der Schwenkachse des Zinkentragarms (13) liegt.

2. Heuwerbungsmaschine nach Anspruch 1, dadurch gekennzeichnet, daß die Schwenkachse (27) des Zinkenträgerteils (26), bezogen auf die Rechraddrehachse (17), mit einem gabelförmig ausgebildeten Hebelarm (32) am äußeren Ende des Zinkentragarms (13) angeordnet ist.

3. Heuwerbungsmaschine nach Anspruch 1 oder 2, dadurch gekennzeichnet, daß jeder Zinkentragarm (13) einen, bezogen auf die Rechraddrehachse (17), radial inneren Abschnitt (34) und einen radial äußeren Abschnitt (35) aufweist, welche parallel zueinander versetzt angeordnet sind.

4. Heuwerbungsmaschine nach einem der vorstehenden Ansprüche, dadurch gekennzeichnet, daß zur Arretierung des Zinkenträgerteils (26) ein um eine zur Schwenkachse (27) des Zinkenträgerteils (26) parallele Achse verschwenkbar angeordneter Winkelhebel (37) vorgesehen ist, der in der Schwadstellung mit seinem einen und in der Zettstellung mit seinem anderen Arm (38 bzw. 39) unter Formschluß an dem Zinkenträgerteil (26) angreift.

5. Heuwerbungsmaschine nach Anspruch 4, dadurch gekennzeichnet, daß der Formschluß durch einen Zapfen (40 bzw. 41) und eine Eingriffsöffnung für den Zapfen (40 bzw. 41) am Winkelhebelarm (38 bzw. 39) bzw. am Zinkenträgerteil (26) zustande kommt.

6. Heuwerbungsmaschine nach Anspruch 4 oder 5, dadurch gekennzeichnet, daß der am Zinkenträgerteil (26) angreifende Winkelhebelarm (38 bzw. 39) auf das Zinkenträgerteil (26) zu federbelastet ist.

7. Heuwerbungsmaschine nach Anspruch 6, dadurch gekennzeichnet, daß die Federbelastung durch eine Zugfeder (42) erfolgt, die mit ihrem einen Ende an einem zwischen den beiden Armen (38 und 39) des Winkelhebels (37) angeordneten Hebel (43) und mit ihrem anderen Ende am Zinkentragarm (13) befestigt ist.

## Claims

1. A hay making machine having at least two rake wheels (2, 3) provided with prong supporting arms (13, 14), at least one (2) of said rake wheels having a reversible direction of rotation, each rake wheel (2, 3) having a stationary curved path (24) disposed around its axis of rotation (17), said path being engaged by control rolls (22) disposed on cranks (21) of the prong supporting arms (13, 14), this position corresponding to the swath position from which the prong supporting arms (13, 14) can be transferred into a further position which corresponds to the ted position in which the control rolls (23) turn in a flat stationary guideway (25) coaxial to the axis of rotation of the rake wheel, and the control rolls (22, 23) of one (22) of the rake wheels assuming an advance position in the ted position and an after-running position in the swath position or vice versa, characterized in that the prongs (15) of each prong supporting arm (13) of the rake wheel (2) having a reversible direction of rotation are attached to a prong carrier element (26) connected via a vertical axis (27) with the prong supporting arm (13) and pivotable by 180° together with the prongs (15) about the vertical axis (27) and lockable, and the vertical axis (27) is staggered with respect to the swivelling axis (bearing 19, 20) of the prong supporting arm (13) in such a way that the longitudinal axis of the prong carrier element (26) lies in the swath position in the swivelling axis of the prong supporting arm (13).

2. The hay making machine according to claim 1, characterized in that the swivelling axis (27) of the prong carrier element (26) is disposed, relative to the axis of rotation (17) of the rake wheel, with a bifurcated lever arm (32) at the outer end of the prong supporting arm (13).

3. The hay making machine according to claim 1 or 2, characterized in that each prong supporting arm (13) has, relative to the axis of rotation (17) of the rake wheel, a radially inner portion (34) and a radially outer portion (35) which are staggered parallel to each other.

4. The hay making machine according to any of the above claims, characterized in that an angle lever (37) disposed so as to be pivotable about an axis parallel to the swivelling axis (27) of the prong carrier element (26) is provided for locking the prong carrier element (26), said angle lever engaging the prong carrier element (26) in a positive-locking manner with one arm in the swath position and with the other arm (38 or 39) in the ted position.

5. The hay making machine according to claim 4, characterized in that the positive lock is effected by a peg (40 or 41) and an opening of engagement for the peg (40 or 41) on the angle lever arm (38 or 39) or on the prong carrier element (26).

6. The hay making machine according to claim 4 or 5, characterized in that the angle lever arm (38 or 39) engaging the prong carrier element (26) is spring-loaded toward the prong carrier element (26).

7. The hay making machine according to claim 6, characterized in that the spring loading is effected by a tension spring (42) attached at one end to a lever (43) disposed between the two arms (38 and 39) of the angle lever (37) and at the other end to the prong supporting arm (13).

## Revendications

1. Machine pour la fenaison avec au moins deux roues de ratissage (2, 3) pourvues de bras de support de dent (13, 14), dont au moins l'une (2) a un sens réversible de rotation, et chaque roue de ratissage (2, 3) présente un chemin incurvé (24) stationnaire disposé autour de son axe de rotation (17), dans lequel s'engagent les galets de commande (22) disposés sur des manivelles (21) des bras de support de dent (13, 14), cette position correspondant à la position d'andainage, et d'où les bras de support de dent (13, 14) peuvent être conduits à une autre position qui correspond alors à la position d'épandage dans laquelle les galets de commande (23) se déplacent dans une voie de guidage (25) stationnaire plane coaxiale à l'axe de rotation de la roue de ratissage, et en outre les galets de commande (22, 23) de l'une (2) des roues de ratissage prennent à la position d'épandage une position en avance et à la position d'andainage, une position en arrière ou inversement, caractérisée en ce que les dents (15) de chacun des bras de support de dent (13) de la roue de ratissage (2) dont le sens de rotation est réversible sont fixées à une partie de support de dent (26) qui est reliée par un axe vertical (27) au bras de support de dent (13) et qui peut pivoter avec les dents 15, autour de l'axe vertical (27), sur 180° et y être bloquée, et l'axe vertical (27) est disposé en étant décalé relativement à l'axe de pivotement (paliers 19, 20) du bras de support de dent (13) de façon que l'axe longitudinal de la partie de support de dent (26) se trouve, à la position d'andainage, dans l'axe de pivotement du bras de support de dent (13).

2. Machine pour la fenaison selon la revendication 1 caractérisée en ce que l'axe de pivotement (27) de la partie de support de dent (26), relativement à l'axe de rotation (17) de la roue de ratissage, est disposé avec un bras de levier (32) en forme de fourche, à l'extrémité externe du bras de support de dent (13).

3. Machine pour la fenaison selon la revendication 1 ou 2 caractérisée en ce que chaque bras de support de dent 13 présente un segment (34) radial interne relativement à l'axe de rotation de la roue de ratissage (17) et un segment radial externe (35), lesquels sont disposés parallèles et décalés l'un par rapport à l'autre.

4. Machine pour la fenaison selon l'une quelconque des revendications précédentes caractérisée en ce que pour le blocage de la partie de support de dent (26) est prévu un levier coudé (37) disposé pivotant autour d'un axe parallèle à l'axe de pivotement (27) de la partie de support de dent (26), lequel levier agit sur la partie de support de dent, avec blocage, par son premier bras à la position d'andainage et par son autre bras à la position d'épandage (38 ou respectivement 39).

5. Machine pour la fenaison selon la revendication 4 caractérisée en ce que le blocage est produit au moyen d'un tourillon (40 ou respectivement 41) et d'une ouverture d'insertion du tourillon (40 ou respectivement 41) sur le bras du levier coudé (38 ou respectivement 39) ou respectivement sur la partie de support de dent (26).

6. Machine pour la fenaison selon la revendication 4 ou 5 caractérisée en ce que le bras (38 ou respectivement 39) du levier coudé agissant sur la partie de support de dent (26) est chargé par ressort sur la partie de support de dent (26).

7. Machine pour la fenaison selon la revendication 6 caractérisée en ce que la charge par ressort est produite au moyen d'un ressort de traction (42), qui est fixé, par sa première extrémité, à un levier (43) disposé entre les deux bras (38 et 39) du levier coudé (37) et par son autre extrémité, sur le bras (13) de support de dent.

Fig.1

Fig.5

Fig.2

Fig.6

Fig. 3

Fig.4

0 073 900